# EUROPEAN PATENT SPECIFICATION

(11) **EP 3 964 070 B1**
(45) Date of publication and mention of the grant of the patent: **03.09.2025**
(21) Application number: 21190891.8
(22) Date of filing: 11.08.2021
(51) Int. Cl.: A21C 11/10, A21C 11/16

(54) **A PASTA CUTTING MACHINE WITH DUAL VENTILATION SYSTEM**
TEIGWARENSCHNEIDMASCHINE MIT DOPPELTEM BELÜFTUNGSSYSTEM
MACHINE DE DÉCOUPE DE PÂTES À DOUBLE SYSTÈME DE VENTILATION

(30) Priority: 02.09.2020 IT 202000020863
(43) Date of publication of application: 09.03.2022
(73) Proprietor: Landucci S.r.l., 51100 Pistoia (IT)
(72) Inventor: LANDUCCI, Lando, 51100 Pistoia (IT); LANDUCCI, Angela, 51100 Pistoia (IT); LANDUCCI, Federica, 51100 Pistoia (IT)
(74) Representative: Mannucci, Michele

(56) References cited:
- WO-A1-00/08950
- WO-A1-2014/087345
- CH-A5- 657 254
- IT-A1- FI 930 256
- IT-B- 1 050 686
- JP-A- H08 126 463
- US-A1- 2016 353 751

## Description

### TECHNICAL FIELD

The present invention relates to improvements to pasta making machines. Embodiments described herein in particular relate to machines for cutting pasta exiting from a die.

### BACKGROUND ART

Machines for cutting pasta exiting from a die are known for example from WO2014/087345. In these machines a chamber is provided for collecting pasta cut by a rotary cutting member, which cuts pasta coming from an overlying die. A belt conveyor is provided below the collection chamber, which discharges the pasta to the external of the cutting machine.

The Italian patent 1050686 discloses a pasta cutting machine, in which the pasta cut by a rotary blade is received in an annular collection chamber and discharged therefrom onto a chute. Similar configurations are disclosed in EP3114935.

In order to prevent pasta from sticking to the walls of the collection chamber and/or on the discharge chute, a ventilation system is provided, which supplies air to the collection chamber and to the chute. These known systems have several drawbacks and limitations, given that they are not capable of carrying out their task optimally in the various parts of the cutting machine.

In particular, the conditions required for ventilation in the pasta collection chamber change depending on the type of pasta produced. The ventilation conditions affect the drop-conveying of the pasta on the underlying chute and can negatively affect the microclimate present in the container downstream of the chute.

It would therefore be beneficial to provide a cutting machine capable of fully or partly overcoming the drawbacks of conventional known systems.

### SUMMARY

According to the invention, disclosed herein is a pasta cutting machine, comprising a cutting unit having a motor-driven rotary shaft with a rotation axis, adapted to engage a rotary blade, and a chamber for collecting the pasta cut by the cutting unit. The collection chamber comprises a side wall surrounding the rotation axis of the rotary shaft of the cutting unit. The side wall is provided with openings for the through-flow of air. The collection chamber is open at the bottom to allow the cut pasta to drop from the collection chamber. Furthermore, the machine comprises a conveyor chute underlying the collection chamber, adapted to receive the pasta exiting from the collection chamber. The conveyor chute comprises a drop surface facing toward the collection chamber.

Advantageously, the cutting machine comprises: a first ventilation unit and a first channel adapted to convey a first air flow to the collection chamber through the openings of the side wall; and a second ventilation unit and a second channel for conveying a second air flow to the conveyor chute and form an air cushion along the drop surface of the chute.

This allows to control and modify two air flows facing toward the collection chamber and toward the chute, one independently from the other to optimize the operation of the machine, for example depending on the characteristics of the pasta to be produced.

In embodiments, the first ventilation unit and the second ventilation unit are controlled independently of each other, in the sense that different ventilation parameters can be set for the two units and in particular a different flow rate and/or speed of the fan, a different temperature, a different moisture, or other parameters.

In advantageous embodiments, the first ventilation unit comprises a first fan driven by a first motor. The first ventilation unit may also comprise a respective first air conditioning system.

Similarly, the second ventilation unit may comprise a second fan driven by a second motor. The second ventilation unit may comprise a second air conditioning system.

A control unit may be used to set, for example, two different air flow rates for the two fans and/or two different temperatures for the two air-conditioning systems, if present. Although it is particularly advantageous to provide two air-conditioning systems, in order to have greater operating flexibility, the possibility that the air-conditioning system be provided for only one of the two ventilation units cannot be ruled out.

Further advantageous features and embodiments of the cutting machine are described hereinafter with reference to the attached drawings, and in the attached claims, which are an integral part of the present description.

### BRIEF DESCRIPTION OF THE DRAWINGS

The invention will be clearer from the description and the attached drawings, which illustrate an embodiment provided by way of non-limiting example of the invention. More particularly, in the drawings:
Figs.1 and 2 are axonometric views of the cutting machine in an embodiment;
Fig.3 is a plan view according to III-III of Fig.2;

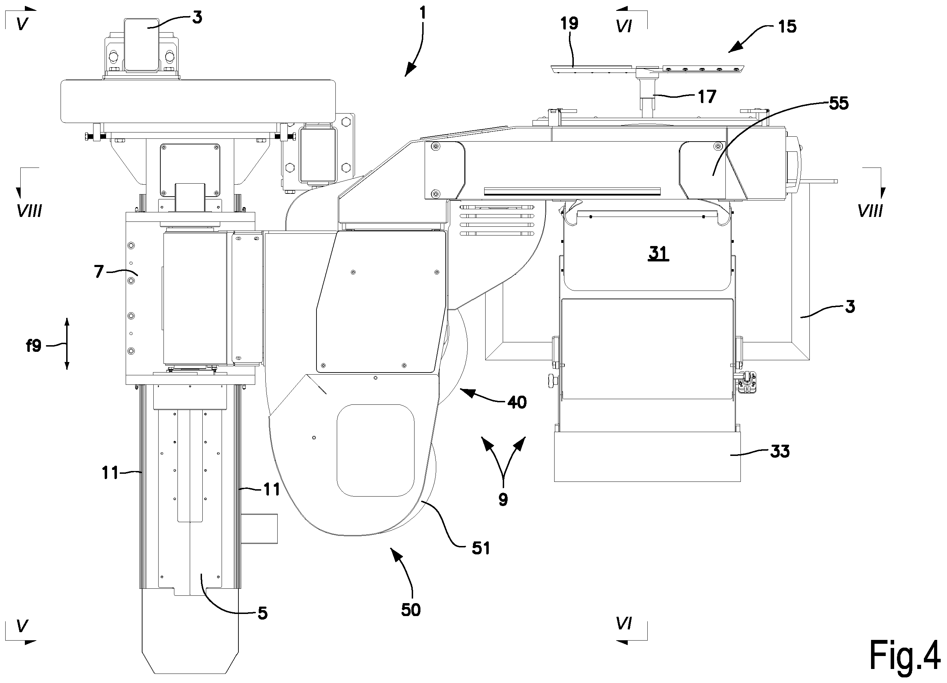

Fig.4 is a lateral view according to IV-VI of Fig.3;

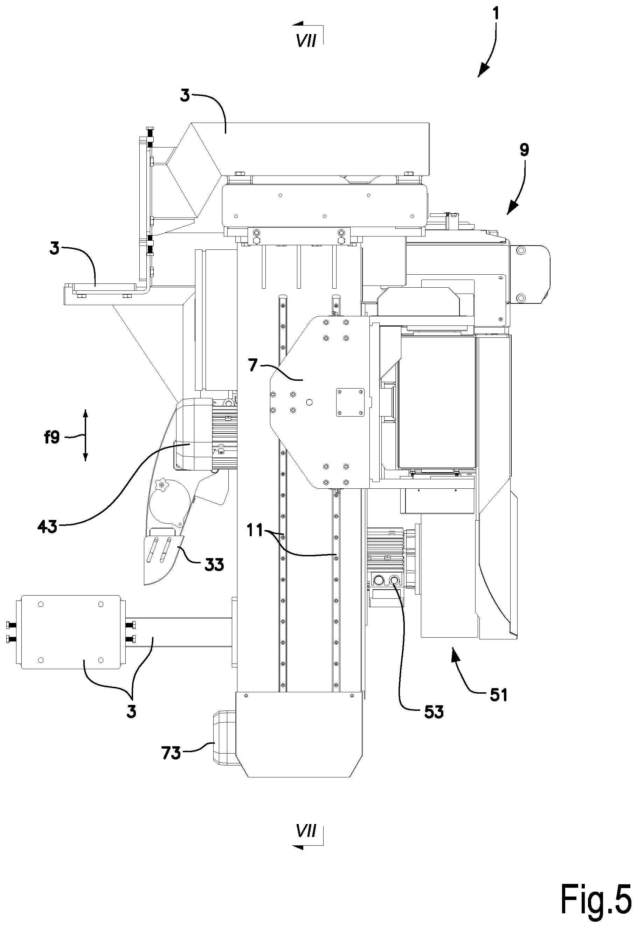

Fig.5 is a lateral view according to V-V of Fig.4;
Fig.6 is a cross-section according to VI-VI of Fig.4;
Fig.7A is a cross-section according to VII-VII of Fig.5;
Fig.7B is a cross-section according to a plane orthogonal to the plane of line VII-VII of Fig.5;
Fig.8 is a cross-section according to VIII-VIII of Figs.4 and 6;
Fig.9 is an axonometric view with parts removed;
Fig.10 is a cross-section according to a vertical plane of the cutting machine combined with a die in a first operative condition; and
Fig.11 is a cross-section similar to Fig.10 in a different operative condition.

### DETAILED DESCRIPTION

The attached figures show an embodiment of a cutting machine, indicated in its entirety with 1. The cutting machine 1 comprises anchoring brackets 3, with which it can be fixed to a wall or another bearing structure. A column 5, which is oriented vertically in the operating configuration is fixed to the brackets 3.

A slide 7, which carries a head or operating unit 9, is slidable along the vertical column 5. The slide 7 is guided along guides 11 integral with the column 5 and preferably arranged outside thereof. Members for vertically moving the operating unit 9 according to the vertical double arrow f9 are arranged inside the column 5. These members are described in greater detail below.

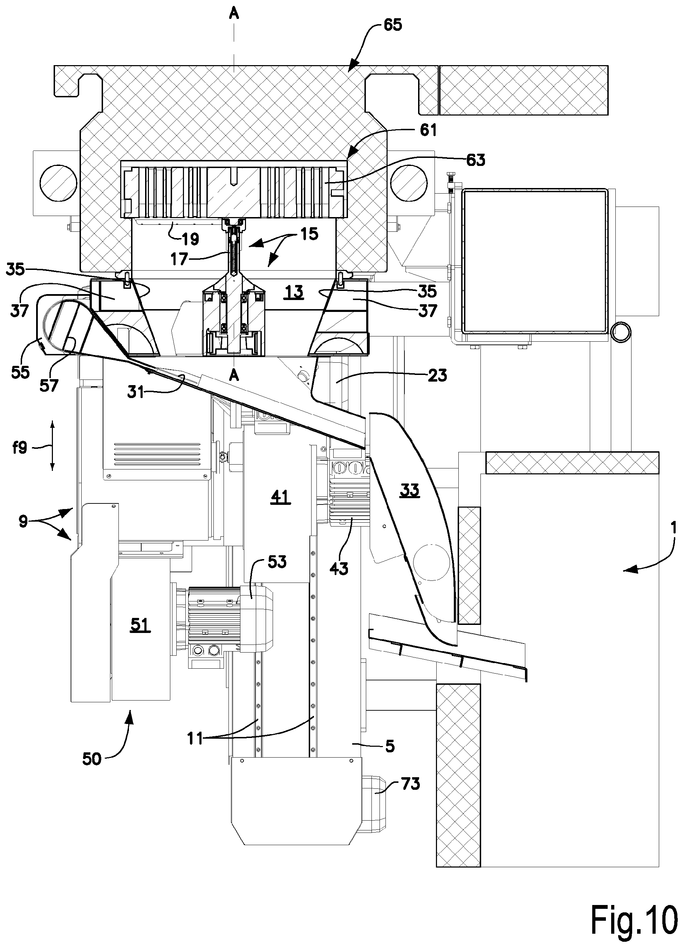

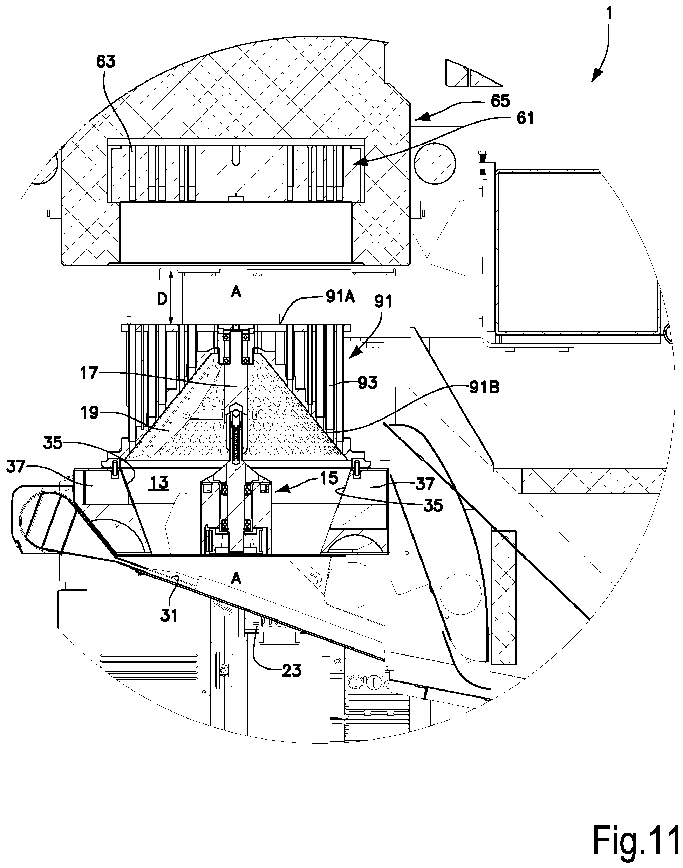

The operating unit 9 comprises a collection chamber 13, for example of substantially annular shape, adapted to collect the pasta cut by a cutting unit 15, coaxial to the annular chamber, upon exiting from a die, described in detail below with reference to Figs. 10 and 11.

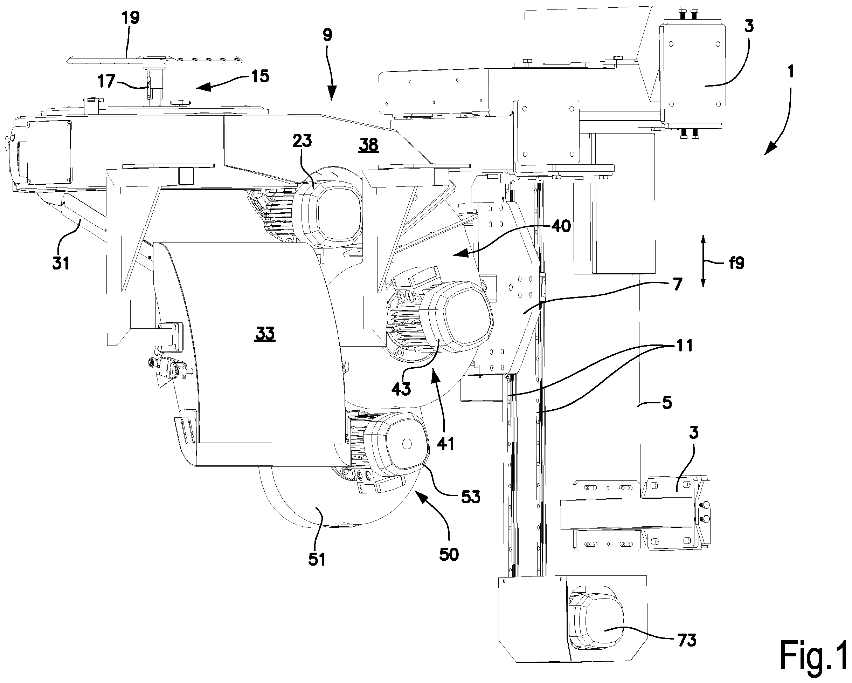

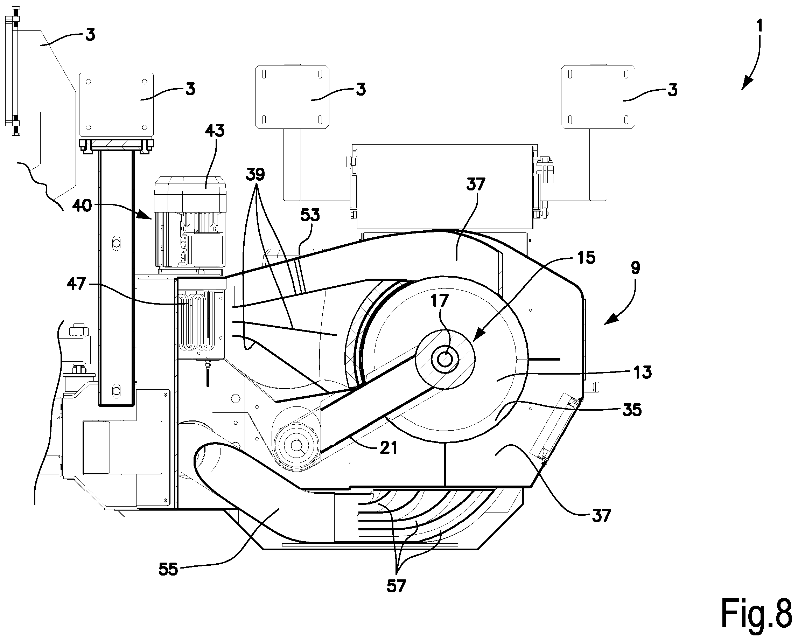

The cutting unit 15 comprises a rotary shaft 17 coaxial with the axis of symmetry of the collection chamber 13. An interchangeable rotary blade, shown in some of the attached figures and indicated with 19, can be associated with the rotary shaft 17. In the illustrated embodiment, the rotary shaft 17 is driven in rotation by means of a belt 21 driven by an electric motor 23 (see Figs.1 and 8).

As will be clarified with specific reference to Figs. 10 and 11, during use the collection chamber 13 and the cutting unit 15 cooperate with a die which continuously supplies the pasta to be cut. An intermediate member, which may vary depending on the shape of pasta to be cut and with which a respective interchangeable rotary knife or blade 19 cooperates, depending on the shape of pasta to be produced, may be interposed between the die and the knife or blade 19 of the cutting unit 15.

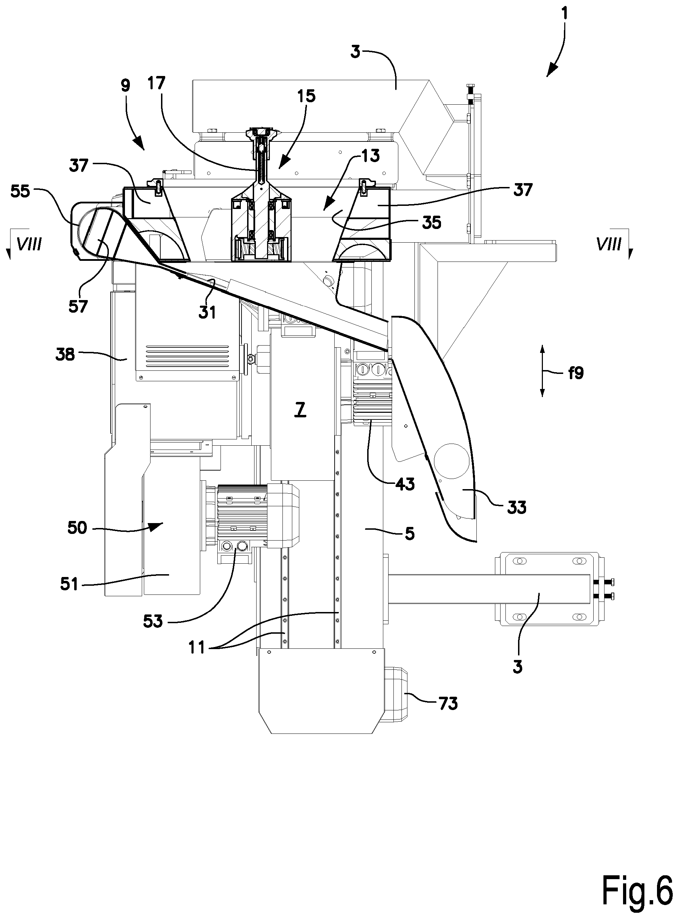

A conveyor device, comprising a conveyor chute 31 extending from an upper end to a lower end, is arranged beneath the collection chamber 13 for collecting the pasta cut by the cutting unit 15. The conveyor chute 31 is configured to collect the cut pasta, which drops by gravity from the collection chamber 13, and to convey it by gravity toward a downstream unit, generally indicated with 33, for example a shaker. To this end, the collection chamber 13 is open at the bottom and the cutting unit 15 is supported coaxially to the collection chamber 13 by means of radial spokes which leave a sufficient gap for the cut pasta to drop toward the conveyor chute 31, see in particular Fig.6. The cut pasta drops from the collection chamber 13 onto a drop surface, facing toward the collection chamber 13, of the conveyor chute 31.

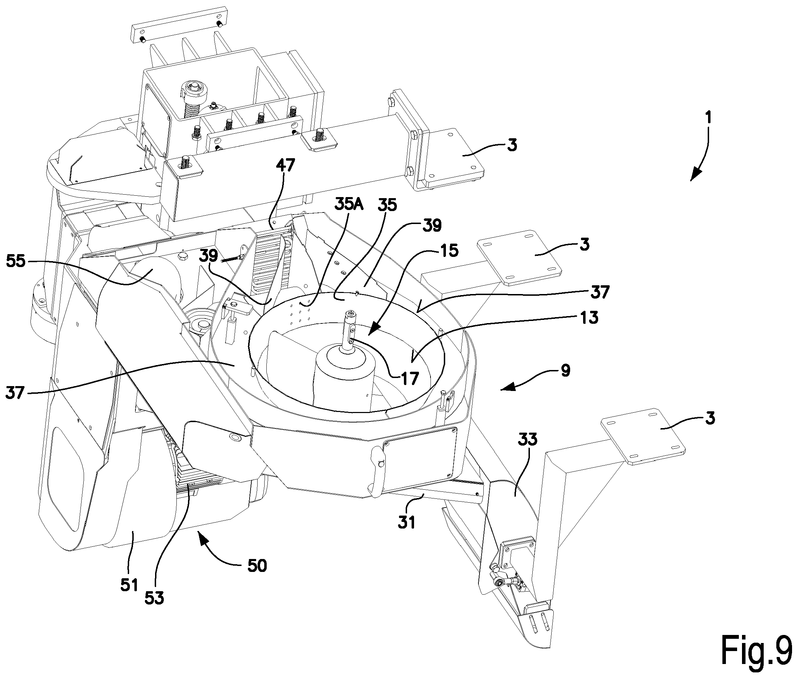

The collection chamber 13 is surrounded by a side wall 35. In the illustrated embodiment, the side wall 35 has a frusto-conical shape, tapered downwards, i.e., toward the conveyor chute 31. The side wall 35 apertured, i.e., it is provided with a plurality of openings for the through-flow of air, with the aim of allowing a correct exit of the pasta from the die toward the open bottom of the collection chamber 13. The openings are shown schematically and only partially in Fig.9, and indicated therein with 35A. It should be noted that the openings 35A are actually distributed uniformly over the entire surface of the frustoconical wall 35 laterally delimiting the collection chamber 13.

The collection chamber 13 is arranged in a plenum 37, part of a first channel for conveying a first air flow into the collection chamber 13 and toward the overlying die. Besides the plenum 37, the first channel comprises a duct 38 which supplies air toward the plenum 37.

In advantageous embodiments, first guide septa or diaphragms 39 are provided, in order to convey the air coming from the duct 38 in a substantially uniform manner in the entire plenum 37 and therefore around the entire side wall 35 and through it into the collection chamber 13. The guide septa or diaphragms 39 split the air flow coming from the duct 38, and more precisely from an air supply mouth at the end of the duct 38, into several partial flows, directed around the collection chamber 13. In the illustrated embodiment, as shown in particular in Figs. 8 and 9, three guide septa or diaphragms 39 are provided, which split the air flow coming from the duct 38 into four partial flows, conveyed so as to impact the entire side wall 35 in a tendentially uniform and balanced manner.

The air is supplied to the duct 38 by a first ventilation unit, indicated in its entirety with 40, and comprising a first fan 41, supported, together with the duct 38 and the plenum 37 with the respective guide septa or diaphragms 39, by the operating unit 9. An electric motor for driving the first fan 41 is indicated with 43.

A first air-conditioning system 47 (Figs.8 and 9) is arranged in the duct 38 and it may comprise a heating unit for heating the air to the desired temperature. The heating unit may comprise electrical resistors, or a heat exchanger, in which a thermal transfer fluid circulates, or any other suitable system.

In some embodiments, it may be foreseen that the first air-conditioning system 47 further comprises other members, for example means for controlling and/or modifying the moisture content of the air supplied along the duct 38 to the plenum 37 and therefrom into the collection chamber 13.

In advantageous embodiments, the machine 1 comprises a second ventilation unit 50, adapted to generate an air stream or flow which facilitates the conveying of the pasta along the conveyor chute 31. The second ventilation unit 50 comprises a second fan 51 driven by an electric motor 53. A channel comprising a duct 55, whose end part extends along the upper portion of the chute 31 is associated with the fan 51. As shown in particular in the section of Fig.8, the end part of the duct 55 forms a plenum extending along the upper end of the chute and therein containing guide septa or diaphragms 57, which are configured so as to convey an approximately uniform air flow over the entire width of the chute 31. The septa 57 extend from an air supply mouth toward the upper edge of the conveyor chute 31. In this manner, the pasta dropping on the chute 31 from the collection chamber 13 is impacted by an approximately uniform air flow irrespective of the transverse position in which it reaches the chute.

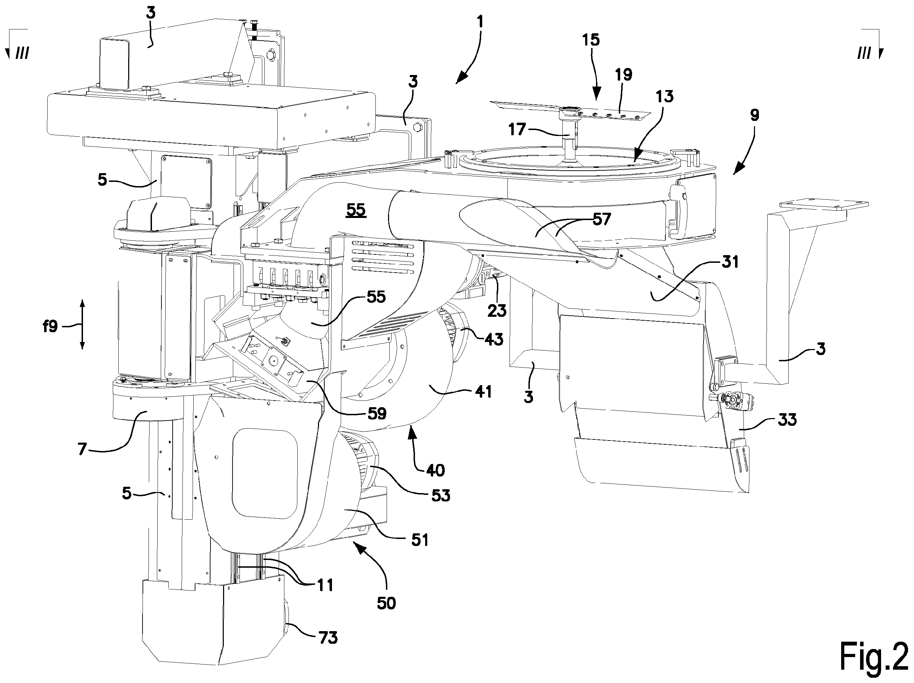

In advantageous embodiments, a second air-conditioning system 59 (Fig.2) is associated with the duct 55. Similarly to the first air-conditioning system 47, also the second air-conditioning system 59 may comprise a heating unit for heating the air to the desired temperature. The heating unit may comprise electrical resistors, or a heat exchanger, in which a thermal transfer fluid circulates, or any other suitable system. It may also be provided that the second air-conditioning system 59 further comprises other members, for example means for controlling and/or modifying the moisture content of the air supplied along the duct 55 to the chute 31.

Fig.10 shows a first operative position of the cutting machine 1 described heretofore, combined with a die 61. The die 61 is provided with a plurality of holes 63, in which inserts can be mounted to shape the pasta into the desired shape. The die 61 is mounted in a head 65. The die and the head 65 are per se known and will not be described in detail.

In the example of use of Fig.10, a rotary knife or rotary blade 19 having a cutting edge substantially orthogonal to the rotation axis A-A of the rotary shaft 17 is used. The blade 19 cooperates directly with the lower surface of the die 61. The position of the head or operating unit 9 of the cutting machine 1 is defined by the abutment of the upper surface of the operating unit 9, overlying the collection chamber 13, against the head 65 in which the die 61 is mounted.

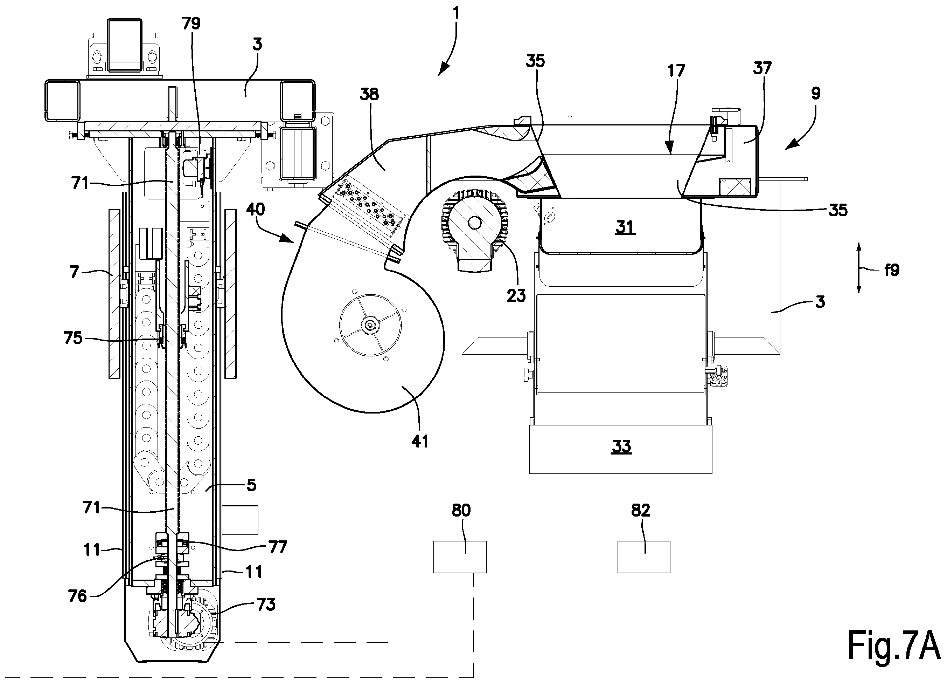

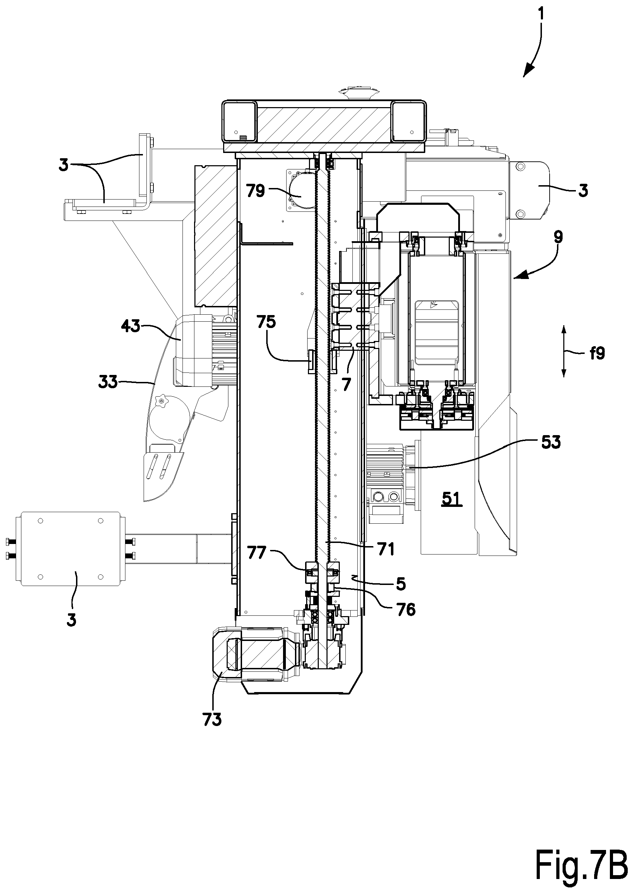

The operative position of the operating unit 9 is reached by means of a threaded bar 71 extending longitudinally in the vertical column 5, shown in Figs.7A and 7B. A motor for driving threaded bar 71 is indicated with 73.

The threaded bar 71 engages a nut screw 75 integral with the slide 7, so that the rotation of the threaded bar 71 in one direction or in the opposite direction causes a lifting or lowering movement of the slide 7 and therefore of the entire operating unit 9, to move the latter to a lower non-operative position and to an upper operative or working position. As mentioned, in the configuration of Fig.10 , in the operative position the operating unit 9 abuts against the head 65 carrying the die 61. The nut screw 75 is integral with the slide 7 slidable along the guides 11 outside the column 5. To this end, the column 5 has a longitudinal opening extending on one face of the column, through which a mechanical connection member passes which connects the nut screw 75 (inside the column) and the slide 7 (outside the column 5).

In this position, pasta is extruded through the holes 63 and is cut by the blade 19 into individual pieces, which drop by gravity through the collection chamber 13 and therefrom onto the conveyor chute 31, and then lastly transferred to the unit 33.

The air flow supplied by the first ventilation unit, comprising the fan 41 and the plenum 37, allows a regular exit of the cut pasta through the collection chamber 13 and dropping thereof toward the conveyor chute 31.

The second air flow supplied by the second ventilation unit, comprising the fan 51 and the duct 55, allows a regular conveying of the pasta along the chute 31 to the shaker or another unit 33.

The use of two separate ventilation systems, allows to optimize the air flow conditions in the two sections of the cutting machine 1, i.e., in the collection chamber 13 and along the chute 31. The flow conditions can be adjusted in terms of different parameters, such as air flow rate and temperature. These parameters can be adjusted independently for the two flows. For example, this allows to use a higher flow rate and/or a higher temperature for the flow conveyed in the collection chamber 13, and a lower flow rate and/or temperature for the flow blown along the chute 31. The value of the flow parameters can be set and managed by means of a control unit 80 (Fig.7A), which can be provided with appropriate user interfaces schematically indicated with 82, for example a monitor and a keypad, a touch-screen, a mouse and/or other suitable devices.

In advantageous embodiments, a load sensor, which may have several functions, can be associated with the above-described mechanism for adjusting the operative position of the operating unit. For example, the load sensor can detect the reaching of the position in which the operating unit 9 abuts against the head 65 carrying the die 61. Furthermore, the load sensor may be used to detect the generation of overloads on the operating unit 9, which can be generated by malfunction events of the cutting machine 1, for example by the accumulation of pasta not correctly dispensed through the die 61 or not correctly cut.

In advantageous embodiments, the load sensor may be a load cell associated with the threaded bar 71. In particular, a load cell 77 (Fig.7A, 7B) associated with a support, for example an axialbearing 76 of the threaded bar 71, may be provided.

An encoder, preferably an absolute encoder, capable of detecting the absolute position of the slide 7, for the purposes that will be clarified hereinafter with specific reference to Fig.11, may be associated with the lifting and lowering mechanism of the operating unit 9 with respect to the die. In advantageous embodiments, an encoder 79 (Fig.7A, 7B), capable of directly detecting the position of the slide 7 with respect to the vertical column 5, may be provided. The encoder 79 may be a wire encoder, with a wire anchored to the slide 7, which provides very precise measurement data and which is at the same time cost-effective.

The encoder 79 and the load cell or other load sensor 77 may be interfaced with the control unit 80 (Fig.7A). The control unit 80 is also interfaced with the motor 73 for driving the threaded bar 71,

As known, the cutting machine 1 may cooperate with accessories interposed between the die 61 and the cutting unit 15, for example in order to cut the pasta at inclined angles with respect to the longitudinal extension of the pasta extruded by the die 61.

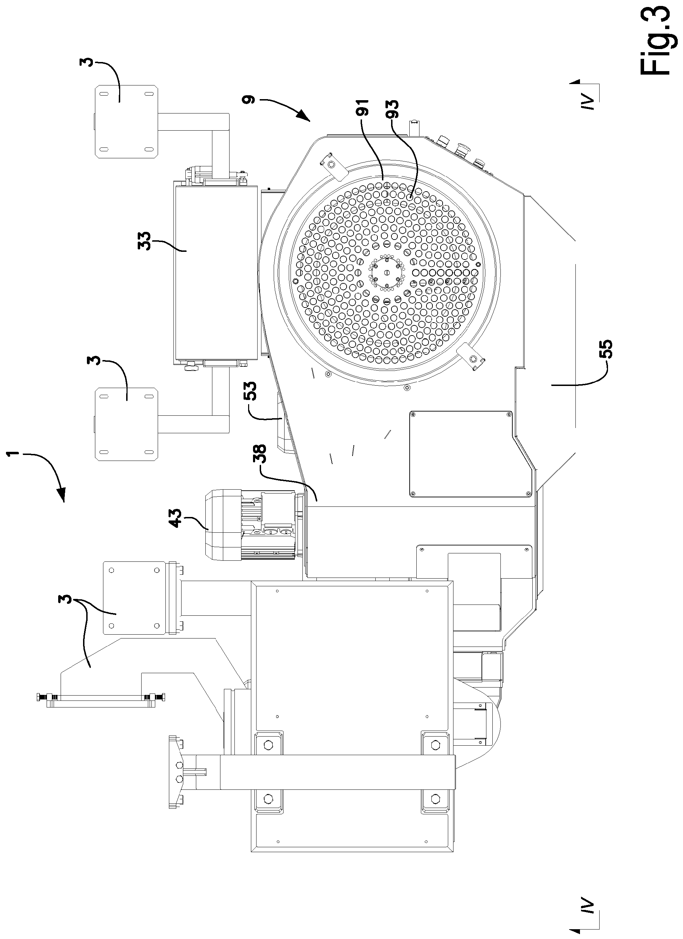

In Fig.11, the cutting machine 1 cooperates with a die 61 by means of a cutting accessory 91 interposed between the collection chamber 13 and the die 51. The cutting accessory 91 (also shown in the plan view of Fig.3, but omitted in the other figures) has a flat upper face 91A and a concave conical lower face 91B. A plurality of passages or holes 93 extend between the two faces 91A and 91B, and in the assembled configuration are aligned with the holes 63 of the die.

When the cutting accessory 91 is mounted on the cutting machine 1, the concave conical surface 91B of the cutting accessory 91 faces toward the collection chamber 13 and basically completes it at the upper part, forming the ceiling thereof. The flat surface 91A, vice versa, faces toward the output surface of the die 61 and normally at a certain distance D therefrom.

During use, pasta strands or pipes extruded by the individual holes 63 of the die 61 enter into the holes 93 of the cutting accessory 91 from the side of the upper flat surface 91A and exit from such holes at the lower conical surface 91B. Here, a specially shaped cutting blade 19, with a cutting edge lying on the lower conical surface 91A of the cutting accessory 91 cuts the pasta strands or pipes into individual pieces with ends inclined with respect to the axis of the holes 93 corresponding to the half-opening angle of the conical surface 91B, for example to produce pasta shapes of the so-called "penne" type or the like.

The air flow generated by the first ventilation unit and enters into the collection chamber 13 through the openings 35A of the frustoconical wall 35 and flows upwards through the holes 93 of the cutting accessory 91 and then impacts the volume between the flat upper surface 91A of the accessory cutting surface 91 and the output surface of the die 61. This air flow ensures that the pasta strands or pipes do not stick to the surface of the holes 93 and that the pieces of cut pasta do not stick to each other and to the conical wall 91B of the cutting accessory 91, or to the wall 37 of the collection chamber 13.

Like in the operative conditions illustrated in Fig.10, also in the operation shown in Fig.11 the air flow supplied by the first ventilation unit 40 can be adjusted, for example in terms of flow rate and/or temperature, independently with respect to the regulation of the air flow supplied by the second ventilation unit, which, like in the case described above, serves to facilitate the exit of the pasta along the chute 31 toward the shaker or another unit 33.

As noted above, the operative position of Fig. 11 is such that the upper surface 91A of the cutting accessory 91 is at a distance D from the lower surface of the die 61. In the mechanisms for moving the operating unit 9 along the column 5, load sensors (load cell 77) and position sensors (encoders 79) serve to facilitate and automate the preliminary step for positioning the operating unit 9, and in particular the upper surface 91A of he cutting accessory 91 fixed thereto, with respect to the die 61.

The positioning method may be carried out as follows. In a first step, while the die is not yet dispensing pasta, the operating unit 9 can be raised (arrow f9) until the upper flat surface 91A of the cutting accessory 90 abuts against the lower surface of the die 61 or against a surface of the head 65, to which the die 61 is fixed. This condition can be detected by means of the load cell 77.

Supply of the pasta that fills the holes 63 of the die and gradually the holes 93 of the cutting accessory 91 can begin at this point. The blade 19 is driven in rotation. When the blade 19 begins to cut the pasta pipes or strands exiting from the lower ends of the holes 93, the operating unit 9 can be gradually lowered by means of the motor 73, until the upper surface 91A of the cutting accessory 91 is brought to the desired distance D from the lower surface of the die 61. The final position can be determined with the aid of the encoder 79. Should this not be an absolute encoder, but a relative encoder, it is sufficient that it determines the downward stroke of the operating unit 9.

This allows to obtain an effective system for facilitating or even automating the positioning of the operating unit 9, and a safety level that allows to stop the dispensing of the pasta through the die 61 in case of malfunctioning, avoiding dangerous overloads on the cutting machine 1 and on the members thereof.

The dual ventilation system, for its part, allows to optimize the thermal and fluid-dynamic conditions inside the cutting machine 1, with the possibility of adapting to various operative conditions, which may depend on the type of dough used, on the shape and size of the pasta produced, or other operating parameters.

## Claims

1. A cutting machine (1) for cutting pasta, comprising:
a cutting unit (15) having a motor-driven rotating shaft (17) with a rotation axis, adapted to engage a rotating blade (19);
a chamber (13) for collecting pasta cut by the cutting unit (15), comprising a side wall (35) surrounding the rotation axis of the rotating shaft (17) of the cutting unit (15); wherein the side wall is provided with openings (35A) for the passage of air; and wherein the collection chamber (13) is open at the bottom to allow the cut pasta to drop from the collection chamber (13);
a conveyor chute (31) underlying the collection chamber (13), adapted to receive the pasta exiting from the collection chamber (13), the conveyor chute (31) comprising a drop surface facing towards the collection chamber (13);
a first ventilation unit (40) and a first channel (37, 38) adapted to convey a first air flow to the collection chamber (13) through the openings (35A) of the side wall (35); **characterised in that** the cutting machine further comprises
a second ventilation unit (50) and a second channel (55) adapted to convey a second air flow to the conveyor chute (31) and to form an air cushion along the drop surface of the chute.

2. The cutting machine (1) of claim 1, wherein the first ventilation unit (40) and the second ventilation unit (50) are controlled independently from each other.

3. The cutting machine (1) of claim 1 or 2, wherein the first ventilation unit (40) comprises a first fan (41) actuated by a first motor (43) and a first air conditioning system (47).

4. The cutting machine (1) of claim 3, wherein the first air conditioning system (47) comprises a first air heating unit.

5. The cutting machine (1) of one or more of the preceding claims, wherein the second ventilation unit (50) comprises a second fan (51) actuated by a second motor (53) and a second air conditioning system (59).

6. The cutting machine (1) of claim 5, wherein the second air conditioning system (59) comprises a second air heating unit.

7. The cutting machine (1) of one or more of the preceding claims, wherein the first channel (37, 38) comprises a first plenum (37) extending about the rotation axis of the cutting unit (15) and surrounding the collection chamber (13).

8. The cutting machine (1) of claim 7, wherein arranged in the first plenum (37) are first guide septa (39) for guiding an air flow generated by the first ventilation unit (40) and extending from a first supply mouth, which supplies air from the first ventilation unit (40), toward the side wall (35) of the collection chamber (13).

9. The cutting machine (1) of claim 8, wherein said first guide septa (39) comprise three guide septa for splitting an air flow from the first supply mouth into four partial flows directed peripherally about the side wall (35).

10. The cutting machine (1) of claim 8 or 9, wherein arranged in the first air supply mouth is the first air heating unit.

11. The cutting machine (1) of one or more of the preceding claims, wherein the side wall (35) of the collection chamber (13) has a substantially frustoconical shape tapered toward the conveyor chute (31).

12. The cutting machine (1) of one or more of the preceding claims, wherein the conveyor chute (31) comprises an upper end and a lower end, and wherein the second channel comprises a second plenum extending along the upper end of the conveyor chute (31).

13. The cutting machine (1) of claim 12, wherein arranged in the second plenum are second guide septa (57) extending from a second air supply mouth, which supplies air from the second ventilation unit (50), toward the upper end of the conveyor chute (31).

14. The cutting machine (1) of claim 13, wherein the second guide septa (57) are arranged for splitting an air flow from the second supply mouth into a plurality of partial flows distributed along the extension of the upper end of the conveyor chute (31).

15. The cutting machine (1) of claim 13 or 14, wherein arranged in the second air supply mouth is the second air heating unit.

16. The cutting machine (1) of one or more of the preceding claims, wherein the cutting unit (15), the chamber for collecting the pasta (13), the conveyor chute (31), the first ventilation unit (40) and the second ventilation unit (50) are supported by an operating unit (9) guided along a substantially vertical column (5).

17. Equipment for the production of pasta, comprising an extruder and a cutting machine according to one or more of the preceding claims.

18. The equipment of claim 17, comprising a cutting accessory (91) which can be interposed between the extruder (61) and the motor-driven rotating shaft (17) of the cutting unit (15).

## Patentansprüche

1. Schneidemaschine (1) zum Schneiden von Teigwaren mit:
einer Schneideeinheit (15) mit einer motorbetriebenen Drehwelle (17) mit einer Drehachse, die ausgebildet ist, um an einer Drehklinge (19) anzugreifen,
einer Kammer (13) zur Aufnahme von Teigwaren, die durch die Schneideeinheit (15) geschnitten wurden, mit einer Seitenwand (35), die die Drehachse der Drehwelle (17) der Schneidereinheit (15) umgibt, wobei die Seitenwand mit Öffnungen (35A) für den durchtritt von Luft versehen ist und wobei die Sammelkammer (13) am Boden offen ist, um zu ermöglichen, das geschnitten Teigwaren aus der Sammelkammer (13) fallen,
einer Förder-Rutsche (31), die unterhalb der Sammelkammer (13) ist, die ausgebildet ist, um die Teigwaren, die aus der Sammelkammer (13) austreten, aufzunehmen, wobei die Förder-Rutsche (31) eine Aufnahmefläche aufweist, die zu der Sammelkammer (13) gerichtet ist,
einer ersten Belüftungseinheit (40) und einem ersten Kanal (37, 38), der ausgebildet ist, um eine erste Luftströmung zu der Sammelkammer (13) durch die Öffnungen (35A) der Seitenwand (35) zu fördern, **dadurch gekennzeichnet, dass** die Schneidemaschine ferner aufweist
eine zweite Belüftungseinheit (50) und einen zweiten Kanal (55), der ausgebildet ist, um einen zweiten Luftstrom zu der Förder-Rutsche (31) zu leiten und ein Luftkissen entlang der Aufnahmefläche der Rutsche zu bilden.

2. Schneidemaschine (1) nach Anspruch 1, wobei die erste Belüftungseinheit (40) und die zweite Belüftungseinheit (50) unabhängig voneinander gesteuert werden.

3. Schneidemaschine (1) nach Anspruch 1 oder 2, wobei die erste Belüftungseinheit (40) ein erstes Gebläse (41) aufweist, das durch einen ersten Motor (43) betrieben wird, und ein erstes Luft-Konditionierungssystem (47).

4. Schneidemaschine (1) nach Anspruch 3, wobei das erste Luft-Konditionierungssystem (47) eine erste Luft-Heizeinheit aufweist.

5. Schneidemaschine (1) nach einem oder mehreren der vorstehenden Ansprüche, wobei die zweite Belüftungseinheit (50) ein zweites Gebläse (51) aufweist, das durch einen zweiten Motor (53) betrieben wird, und ein zweites Luft-Konditionierungssystem (59).

6. Schneidemaschine (1) nach Anspruch 5, wobei das zweite Luft-Konditionierungssystem (59) eine zweite Luft-Heizeinheit aufweist.

7. Schneidemaschine (1) nach einem oder mehreren der vorstehenden Ansprüche, wobei der erste Kanal (37, 38) Einen ersten Raum (37) aufweist, der sich um die Drehachse der Schneidereinheit (15) erstreckt und die Sammelkammer (13) umgibt.

8. Schneidemaschine (1) nach Anspruch 7, wobei in dem ersten Raum (37) eine erste Führungswand (39) zum Leiten einer Luftströmung, die durch die erste Belüftungseinheit (40) erzeugt wird, und sich von einer ersten Zufuhröffnung erstreckt, vorhanden ist, die Luft von der ersten Belüftungseinheit (40) zu der Seitenwand (35) der Sammelkammer (13) zuführt.

9. Schneidemaschine nach Anspruch 8, wobei die erste Führungswand (39) drei Führungswände zur Aufteilung einer Luftströmung von der ersten Zuführöffnung in vier Teilströmungen aufweist, die zu der Peripherie hinsichtlich der Seitenwand (35) gerichtet sind.

10. Schneidemaschine (1) nach Anspruch 8 oder 9, wobei in der ersten Zuführöffnung die erste Luft-Heizeinheit angeordnet ist.

11. Schneidemaschine (1) nach einem oder mehreren der vorstehenden Ansprüche, wobei die Seitenwand (35) der Sammelkammer (13) eine im wesentlichen kegelstumpf-förmige Form aufweist, die zu der Förder-Rutsche (31) abgeschrägt ist.

12. Schneidemaschine (1) nach einem oder mehreren der vorstehenden Ansprüche, wobei die Förder-Rutsche (31) ein oberes Ende und ein unteres Ende aufweist und wobei der zweite Kanal einen zweiten Raum aufweist, der sich entlang des oberen Endes der Förder-Rutsche (31) erstreckt.

13. Schneidemaschine nach Anspruch 12, wobei in dem zweiten Raum eine zweite Trennwand (57) angeordnet ist, die sich von der zweiten Luft-Zufuhröffnung erstreckt, die Luft von der zweiten Belüftungseinheit (50) zu dem oberen Ende der Förder-Rutsche (31) zuführt.

14. Schneidemaschine (1) nach Anspruch 13, wobei die zweite Führungswand (57) angeordnet ist, um eine Luftströmung von der zweiten Zufuhröffnung in eine Anzahl von Teilströmungen zu unterteilen, die entlang der Ausdehnung des oberen Endes der Förder-Rutsche (31) verteilt sind.

15. Schneidemaschine (1) nach Anspruch 13 oder 14, wobei in der zweiten Luft-Zufuhröffnung die zweite Luft-Heizeinheit angeordnet ist.

16. Schneidemaschine (1) nach einem oder mehreren der vorstehenden Ansprüche, wobei die Schneideeinheit (15), die Kammer zur Aufnahme der Teigwaren (13), die Förder-Rutsche (31), die erste Belüftungseinheit (40) und die zweite Belüftungseinheit (50) von einer Betriebseinheit (9) getragen werden, die entlang einer im Wesentlichen vertikalen Säule (5) angeordnet sind.

17. Anlage zur Herstellung von Teigwaren mit einem Extruder und einer Schneidemaschine nach einem oder mehreren der vorstehenden Ansprüche.

18. Anlage nach Anspruch 17 mit einem Schneide-Zubehör (91), das zwischen dem Extruder (61) und der motorbetriebenen Welle (17) der Schneidereinheit (15) angeordnet ist.

## Revendications

1. Machine de coupe (1) pour couper des pâtes, comprenant :
une unité de coupe (15) ayant un arbre tournant (17) entraîné par un moteur, avec un axe de rotation, apte à entraîner une lame tournante (19) ;
une chambre (13) pour collecter des pâtes coupées par l'unité de coupe (15), comprenant une paroi latérale (35) entourant l'axe de rotation de l'arbre tournant (17) de l'unité de coupe (15), la paroi latérale étant pourvue d'ouverture (35A) pour le passage de l'air ; et la chambre de collecte (13) étant ouverte au fond pour permettre aux pâtes coupées de tomber depuis la chambre de collecte (13) ;
un glissoir (31) situé en dessous de la chambre de collecte (13), apte à recevoir les pâtes sortant de la chambre de collecte (13), le glissoir (31) comprenant une surface de chute tournée vers la chambre de collecte (13) ;
une première unité de ventilation (40) et un premier canal (37, 38) apte à convoyer un premier flux d'air à la chambre de collecte (13) à travers les ouvertures (35A) de la paroi latérale (35) ; **caractérisé en ce que** la machine de coupe comprend en outre
une deuxième unité de ventilation (50) et un deuxième canal (55) apte à convoyer un deuxième flux d'air vers le glissoir (31) et à former un coussin d'air le long de la surface de chute du glissoir.

2. La machine de coupe (1) selon la revendication 1, dans laquelle la première unité de ventilation (40) et la deuxième unité de ventilation (50) sont commandées indépendamment l'une de l'autre.

3. La machine de coupe (1) selon la revendication 1 ou 2, dans laquelle la première unité de ventilation (40) comprend un premier ventilateur (41) actionné par un premier moteur (43) et un premier système de conditionnement d'air (47).

4. La machine de coupe (1) selon la revendication 3, dans laquelle le premier système de conditionnement d'air (47) comprend une première unité de chauffage d'air.

5. La machine de coupe (1) selon l'une ou plusieurs des revendications précédentes, dans laquelle la deuxième unité de ventilation (50) comprend un deuxième ventilateur (51) actionné par un deuxième moteur (53) et un deuxième système de conditionnement d'air (59).

6. La machine de coupe (1) selon la revendication 5, dans laquelle le deuxième système de conditionnement d'air (59) comprend une deuxième unité de chauffage d'air.

7. La machine de coupe (1) selon l'une ou plusieurs des revendications précédentes, dans laquelle le premier canal (37, 38) comprend une première chambre de tranquillisation (37) s'étendant autour de l'axe de rotation de l'unité de coupe (15) et entourant la chambre de collecte (13).

8. La machine de coupe (1) selon la revendication 7, dans laquelle de premières cloisons de guidage (39) sont agencées dans la première chambre de tranquillisation (37) pour guider un flux d'air généré par la première unité de ventilation (40) et s'étendent depuis une première bouche d'alimentation qui fournit de l'air provenant de la première unité de ventilation (40) vers la paroi latérale (35) de la chambre de collecte (13).

9. La machine de coupe (1) selon la revendication 8, dans laquelle les premières cloisons de guidage (39) comprennent trois cloisons de guidage pour scinder un flux d'air provenant de la première bouche d'alimentation en quatre flux partiels dirigés de manière périphérique autour de la paroi latérale (35).

10. La machine de coupe (1) selon la revendication 8 ou 9, dans laquelle la première unité de chauffage d'air est agencée dans la première bouche d'alimentation en air.

11. La machine de coupe (1) selon l'une ou plusieurs des revendications précédentes, dans laquelle la paroi latérale (35) de la chambre de collecte (13) a une forme tronconique effilée vers le glissoir (31).

12. La machine de coupe (1) selon l'une ou plusieurs des revendications précédentes, dans laquelle le glissoir (31) comprend une extrémité supérieure et une extrémité inférieure et dans laquelle le deuxième canal comprend une deuxième chambre de tranquillisation le long de l'extrémité supérieure du glissoir (31).

13. La machine de coupe (1) selon la revendication 12, dans laquelle des deuxièmes cloisons de guidage (57) sont agencées dans la deuxième chambre de tranquillisation et s'étendent depuis une deuxième bouche d'alimentation, laquelle fournit de l'air de la deuxième unité de ventilation (50) vers l'extrémité supérieure du glissoir (31).

14. La machine de coupe (1) selon la revendication 13, dans laquelle les deuxièmes cloisons de guidage (57) sont agencées pour scinder un flux d'air provenant de la deuxième bouche d'alimentation en une pluralité de flux partiels distribués le long de l'extension de l'extrémité supérieure du glissoir (31).

15. La machine de coupe (1) selon la revendication 13 ou 14, dans laquelle la deuxième unité de chauffage d'air est agencée dans la deuxième bouche d'alimentation en air.

16. La machine de coupe (1) selon l'une ou plusieurs des revendications précédentes, dans laquelle l'unité de coupe (15), la chambre de collecte de pâtes (13), le glissoir (31), la première unité de ventilation (40) et la deuxième unité de ventilation (50) sont supportés par une unité opérationnelle (9) guidée le long d'une colonne sensiblement verticale (5).

17. Equipement pour la production de pâtes, comprenant une extrudeuse et une machine de coupe selon l'une ou plusieurs des revendications précédentes.

18. L'équipement selon la revendication 17, comprenant un accessoire de coupe (91), lequel peut être interposé entre l'extrudeuse (61) et l'arbre tournant entraîné par un moteur (17) de l'unité de coupe (15).
